# EUROPEAN PATENT SPECIFICATION

(11) **EP 2 188 444 B1**
(45) Date of publication and mention of the grant of the patent: **19.12.2012**
(21) Application number: 08794129.0
(22) Date of filing: 12.09.2008
(51) Int. Cl.: D21F 1/80, D21F 1/66, B01D 33/056, B01D 33/04

(54) **METHOD AND A DEVICE FOR THE DEWATERING OF A FIBRE SUSPENSION IN A VERTICAL ELONGATE CONTAINER FORMED OF TWO ENDLESS WIRE BANDS**
VERFAHREN UND VORRICHTUNG ZUR ENTWÄSSERUNG EINER FASERSTOFFSUSPENSION IN EINEM AUS ZWEI ENDLOSSIEBEN GEBILDETEN AUFRECHTEN, LÄNGLICHEN BEHÄLTER
PROCÉDÉ ET DISPOSITIF D'ÉGOUTTAGE D'UNE SUSPENSION DE FIBRES DANS UN CONTENANT OBLONG VERTICAL FORMÉ DE DEUX BANDES DE TOILE SANS FIN

(30) Priority: 17.09.2007 SE 0702092
(43) Date of publication of application: 26.05.2010
(73) Proprietor: Metso Paper, Inc., 00130 Helsinki (FI)
(72) Inventor: HODEN, Ebbe, S-645 34 Strängnäs (SE)
(74) Representative: Schmid, Wolfgang
(86) International application number: PCT/SE2008/000509
(87) International publication number: WO 2009/038515

(56) References cited:
- WO-A1-01/59209
- WO-A1-99/39048
- US-A- 4 017 398
- US-A- 4 039 450
- US-A- 5 725 783

## Description

The invention relates to a method and a device of the kind that is seen in the preamble of the appended independent method claim and the device claim, respectively.

The fibre suspension may, for instance, be the liquid suspension removed from a stock, which contains a residual amount of fibres. It may be desirable to, from the suspension, separate at least a part of the particles in order to be able to use the same in a useful way. Furthermore, it is necessary or favourable to, from the suspension, remove as great part of the particles as possible before the suspension is brought back to the environment.

A method for the dewatering of a fibre suspension according to the preamble of claim 1 and a device for the dewatering of a fibre suspension according to the preamble of claim 6 are known from WO-A-99/39048.

It is in that connection previously well known that it is possible to lead the suspension through a screening material through which the liquid share of the suspension passes, the fibre fraction largely being collected on the screening material and then being collected for further handling.

A problem is in that connection to carry out such a separation in an efficient way. Therefore, an object of the invention is to provide a technique, by which separation of fibres from a fibre suspension can be carried out in a simple and efficient manner.

The object is attained by the invention.

The invention is defined in the appended independent claims.

Embodiments of the invention are defined in the appended dependent claims.

The invention comprises essentially that the screening material is formed to a vertically orientated elongate container, that the suspension is introduced into the screening container via a vertical elongate nozzle assembly, which in all essentials is concentrically arranged in the container, and that the nozzle assembly is arranged to spray the suspension via a plurality of nozzles spaced-apart around the assembly, against the inside of the shell wall of the container.

The screening container is formed of two endless wire bands, one wider and one more slender, which mutually are lap joined at adjacent border parts, which along the length thereof carry a respective part of a Velcro® coupling, the bands together being formed as a pipe, the wider band being formed to C-shape by folding the two border parts thereof in over one of the main surfaces of the band, the folded border parts of the wider band being brought into overlapping contact with the border parts of the extended more slender wire band, which along the length thereof carry the second part of the Velcro® coupling, and that the tubular screening container is established along a common longitudinal section of the paths of the two running wire bands, that the lower end part of the screening container is kept substantially sealed, and that a fibre suspension is introduced by elevated pressure into a nozzle assembly, which is centrally placed in the screening container running downward and open upward, the fibre suspension being led out in the form of jets of high speed from the nozzle assembly via a number of spray nozzles spaced-apart around the nozzle assembly, and is sprayed against the inside of the screening container, so that a great share of liquid directly is led through the wire cloth and the fibres to a great share are retained on the inside of the container and are conveyed by the wire cloth. The suspension flow is adapted so that the container in all essentials is not flowed by suspension, i.e., so that the jets from the nozzle assembly 1 freely pass between the same and the inside of the container.
- Fig. 1: schematically shows a side view of a device according to the invention.
- Fig. 2: shows a section taken along line II-II in fig. 1.
- Fig. 3: shows a schematic section taken along line III-III in fig. 1.
- Fig. 4: schematically shows a section taken along line IV-IV in fig. 1.
- Fig. 5: shows a developed embodiment of the device, in a section through the screening container formed of the wire bands.
- Fig. 6: schematically shows a section taken along the line VI-VI in fig. 5.

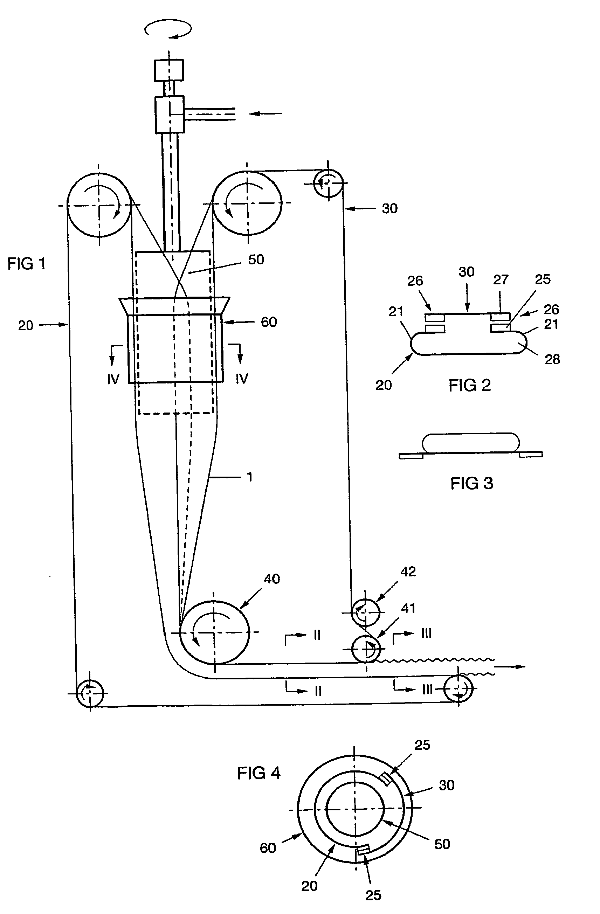

Fig. 1 shows a wider endless circumferential wire band 20 and a more slender endless wire band 30, which along a vertical distance run to each other and are formed to a vertically orientated and running pipe 1, which from above receives a fibre suspension. The lower end of the screen pipe extends around a deflection roller 40 and is in that connection substantially closed. In fig. 2, it can be seen that the wider band 20 is folded to C-shape and has the edges 21 thereof turned in over one of the main surfaces of the band 20. On the outside of the edges 21, there is, along the respective edge, a first part 25 of a Velcro® coupling 26. The second part 27 of the Velcro® coupling 26 lies along one of the edges of one of the main surfaces of the more slender band 30. The suspension that is introduced into the tubular container 1, is dewatered through the wall of the container, and a fibre fraction 28 is conveyed in the pipe running past the deflection wheel 40. After that, the more slender band 30 extends around 180° of a first deflection roller 41 and then around a part of a second deflection roller 42 to be lifted off from the wider path 20, which runs further, the edge parts 21 thereof being dropped back out in the plane of the band 20, i.e., the memory state of the band 20, before the band runs back at deflection rollers to afresh form the upward open tubular screening container 1. After the deflection/lifting-off rollers 41, 42, the more slender wire band 30 is brought back via deflection rollers to afresh form the running screening pipe 1.

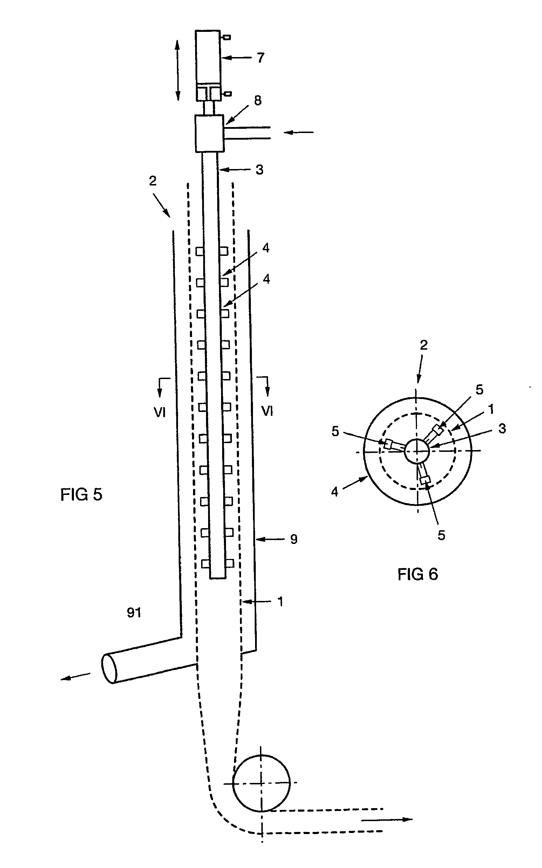

In figs. 1 and 4, it can be seen that a vertically orientated support pipe 50 forms a support core around the circumference of which the bands 20, 30 are laid by an outer tubular control device 60, which is shown to be in the shape of a funnel, so that the border areas of the bands 20, 30 are brought to overlapping and mutual detachable engagement via the Velcro® coupling parts 25, 27 thereof (cf. fig. 2). The deflection rollers 41, 42 form a device in order to limit the length of the tubular screening container. In fig. 5, it is shown that the pipe 1 is surrounded by a housing 9 having a bottom outlet 91, for liquid passing through the wall of the screen pipe 1. From above, a nozzle assembly then extends down into the container 1. The nozzle assembly 2 is shown to have a pipe 3 generally directed vertically downward, which connects to a plurality of groups 4 of nozzles 5, which are arranged to spray the suspension which is introduced via the pipe 3, radially outward against the inside of the container 1. In fig. 6, it can be seen that the nozzles of the respective group 4 are distributed around the circumference of the assembly 2. The assembly 2 is in all essentials concentric with the pipe 1 and is arranged rotatable around the axis thereof and of the container by means of a schematically shown driving engine 7. The suspension is supplied to the pipe 3 by elevated pressure, for instance via a swivel connection 8. The container 1 is surrounded by a housing 9, the walls of which are lying at radial distance outside the container 1 and has a bottom outlet 91. The pipe 1 extends through the bottom of the housing 9.

An engine 7 is shown arranged to impart the assembly 2 a rotary motion around the axis of the pipe. The nozzles 5 are preferably arranged to emit conically diverging sprays to as far as possible distribute the suspension over the inner area of the free wall surface of the pipe 1.

It will be appreciated that the pipe 1 downstream the forming pipes 50, 60 is not screened off by some supporting structure, so that the bands 20, 30 far-reaching can be utilized for the screening.

By the fact that the assembly 2 is rotated around the axis of the container 1, the suspension that by elevated pressure is directed toward the inside of the container 1 will be more evenly distributed over the bands 20, 30. The assembly 2 is substantially stationary, while the screening pipe 1 runs downward in relation to the assembly 2.

From fig. 1, it can be realized that the fibre fraction 28 can be led further from the extended wider band 20 downstream the door opening device 41, 42 on a conveyor (not shown). Furthermore, it is realized that it is possible to mechanically by pressing additionally dewater the fibre cake 28, when the border parts 21 of the wire band 20 have been turned away from the fibre residual path 28.

By utilizing Velcro® couplings to detachably connect the wire paths 20, 30 for the formation of the tubular screening container 1, an efficient screening is attained of the fibre suspension, especially by the fact that the suspension sprays are not blocked by support structures. The liquid share of the suspension can thereby efficiently pass through the wire paths 20, 30.

The flow of suspension introduced via the spray assembly can be controlled so that the pipe 1 is liquid-filled only in a lower portion, upstream the shut-off/deflection device 40, so that the sprays from the assembly 2 are not stopped by accumulated liquid in the pipe 1. By driving the sprays using an elevated pressure against the inside of the pipe 1, an efficient separation is attained, and the sprays also afford a cleaning effect, so far that they tend to put down fibres that tend to remain on the inside of the wall of the container 1 running downward.

The driving engine 7 can impart the nozzle assembly the rotary motion described above and in addition possibly a reciprocating motion in the vertical direction.

## Claims

1. A method for the dewatering of a fibre suspension, the suspension being introduced from above into an elongate tubular vertically orientated container (1) of a fibre separation material such as wire cloth, the container (1) being formed of a wider endless flexible wire band (20) and a more slender endless flexible wire band (30), which mutually are lap joined at adjacent border parts, the container (1) being established along a common longitudinal section of the tracks of the two wire bands, **characterized in that** the border parts carry a respective part of a Velcro® coupling (26), that the cross section of the wider band (20) is reshaped into C-shape, by folding the two border parts thereof in over the main surface of the wider band, that the folded border parts having first Velcro® coupling parts (25) arranged thereon of the wider band (20), are brought into overlapping contact with the overlapping border parts having second Velcro® coupling parts (27) arranged thereon of the extended more slender band for the formation of the tubular container (1), and that the fibre suspension is introduced by elevated pressure to a nozzle assembly (2), which is centrally placed in the container (1), the fibre suspension being led out from the nozzle assembly via a number of nozzles (5) spaced-apart around the nozzle assembly, toward the inside of the container (1).

2. Method according to claim 1, **characterized in that** the nozzle assembly (2) is rotated in relation to the container (1) around the substantially vertical longitudinal axis thereof.

3. Method according to claim 1 or 2, **characterized in that** the nozzle assembly comprises a pipe (3) directed vertically downwards carrying a plurality of groups (4) of nozzles (5) spaced-apart along the longitudinal direction of the pipe, the nozzles of each group being spaced-apart around the longitudinal axis of the nozzle assembly.

4. Method according to claim 3, **characterized in that** the nozzles (5) are arranged to form suspension jets that are directed in all essentials radially toward the inside of the container (1).

5. Method according to any one of claims 1-4, **characterized in that** the lower end part of the tubular container (1) is imparted a flat shape, and is directed generally horizontal with the more slender wire band (30) situated at the top, that the more slender wire band (30) is led around at least one deflection roller for the separation of the Velcro® coupling parts thereof from the corresponding Velcro® coupling parts of the folded over border parts of the wider wire band (20), after which in the longitudinal direction of the wider band, the border parts of the wider band are folded back to the plane for the transversally central portion of the wider wire band, so that an initially dewatered fibre fraction on the transversally central part of the wider wire band can be exposed to a mechanical pressing dewatering on the wider extended wire path.

6. A device for the dewatering of a fibre suspension, comprising a vertically elongate and vertically orientated tubular container (1) of a liquid-permeable fibre-separating material such as wire cloth and a means for introducing the fibre suspension into the upper part of the container (1), the container (1) being formed of one wider endless flexible wire band (20) and a more slender endless flexible wire band (30), the two wire bands being arranged to run in parallel in the vicinity of each other in a common longitudinal section of their paths, **characterized in that** forming means (50, 60) are provided to curve the wider band (20) to a generally C-shaped cross section, the outside of the edge parts (21) of the curved band each carrying a first part (25) of a Velcro® coupling (26) along the length of the band (20), and that control means (60, 50) are arranged to bring the edge parts of the more slender band (30), which edge parts along the length thereof carry the second part (27) of the Velcro® coupling (26), to overlapping contact with the respective part (25) of the Velcro® coupling (26) of the wider band in the edge overlapping area of the bands, and that a nozzle assembly (2) is centrally placed in the container (1), the nozzle assembly having a plurality of nozzles which are arranged to direct jets of the fibre suspension against the inside of the circumference wall of the container (1), and that means are provided to, by elevated pressure, supply the fibre suspension to the nozzle assembly.

7. Device according to claim 6, **characterized in that** the nozzle assembly has a plurality of groups of nozzles spaced-apart along the nozzle assembly, the nozzles of the groups being spaced-apart around the circumference of the assembly.

8. Device according to claim 6 or 7, **characterized by** a driving assembly for the rotation of the nozzle assembly around the axis of the container (1).

9. Device according to claim 8, **characterized in that** the driving assembly is arranged to impart the nozzle assembly a reciprocating motion along the axis of the container (1), and that the container (1) at a distance is enclosed by a housing (9) for collection of suspension liquid and that the housing has a bottom drainage (91) for leading away collected suspension liquid.

## Patentansprüche

1. Verfahren zur Entwässerung einer Faserstoffsuspension, wobei die Suspension von oben in einen länglichen, rohrförmigen, senkrecht ausgerichteten Behälter (1) aus einem Fasertrennmaterial, wie zum Beispiel einem Siebtuch, eingerührt wird, wobei der Behälter (1) aus einem breiteren, endlosen, flexiblen Siebband (20) und einem schmäleren, endlosen, flexiblen Siebband (30) gebildet ist, welche an benachbarten, angrenzenden Teilen überlappend miteinander verbunden sind, wobei der Behälter (1) entlang eines gemeinsamen, länglichen Abschnitts des Wegs der zwei Siebbänder gebildet ist,
**dadurch gekennzeichnet, dass**
die angrenzenden Teile ein jeweiliges Teil einer Velcro®-Kupplung (26) tragen, dass der Querschnitt des breiteren Bands (20) durch Einfalten der zwei angrenzenden Teile desselben über die Hauptfläche des breiteren Bands in eine C-Form umgeformt wird, dass die gefalteten angrenzenden Teile, welche erste Velcro®-Kupplungsteile (25) an dem breiteren Band (20) angebracht haben, in einen überlappenden Kontakt mit den überlappenden angrenzenden Teilen gebracht werden, welche zweite Velcro®-Kupplungsteile (27) an dem verlängerten, schmäleren Band zur Bildung des rohrförmigen Behälters (1) angebracht haben, und dass die Fasersuspension durch erhöhten Druck in eine Düsenanordnung (2) eingeführt wird, welche zentral in dem Behälter (1) angeordnet ist, wobei die Fasersuspension aus der Düsenanordnung über eine Anzahl von um die Düsenanordnung mit Abstand voneinander angeordneten Düsen (5) in Richtung der Innenseite des Behälters (1) abgelassen wird.

2. Verfahren nach Anspruch 1,
**dadurch gekennzeichnet, dass**
die Düsenanordnung (2) in Bezug zu dem Behälter (1) um die im Wesentlichen vertikale Längsachse desselben rotiert wird.

3. Verfahren nach Anspruch 1 oder 2,
**dadurch gekennzeichnet, dass**
die Düsenanordnung eine vertikal nach unten gerichtete Leitung (3) aufweist, welche eine Vielzahl von Gruppen (4) von Düsen (5) trägt, die entlang der Längsrichtung der Leitung mit Abstand voneinander angeordnet sind, wobei die Düsen von jeder Gruppe um die Längsachse der Düsenanordnung voneinander beabstandet sind.

4. Verfahren nach Anspruch 3,
**dadurch gekennzeichnet, dass**
die Düsen (5) dafür vorgesehen sind, Suspensionsstrahlen zu bilden, welche im Wesentlichen in Richtung der Innenseite des Behälters (1) gerichtet sind.

5. Verfahren nach einem der Ansprüche 1 bis 4,
**dadurch gekennzeichnet, dass**
das untere Endteil des rohrförmigen Behälters (1) mit einer flachen Form ausgeführt wird und im Wesentlichen horizontal mit dem an der Oberseite angeordneten, schmäleren Siebband (30) ausgerichtet ist, das das schmälere Siebband (30) um wenigstens eine Umlenkwalze für die Trennung der Velcro®-Kupplungsteilen derselben von den entsprechenden Velcro®-Kupplungsteilen der übergefalteten angrenzenden Teile des breiteren Siebbands (20) geführt wird, wonach in der Längsrichtung des breiteren Bands die angrenzenden Teile des breiteren Bands zurück auf die Ebene für den mittleren Querbereich des breiteren Bands gefaltet werden, sodass ein ursprünglich entwässerter Faserstoffanteil des mittleren Querteils des breiteren Siebbands einer mechanischen Pressentwässerung auf der breiteren, verlängerten Siebbahn ausgesetzt werden kann.

6. Vorrichtung zur Entwässerung einer Faserstoffsuspension, mit einem in vertikaler Richtung, länglichen und vertikal orientierten, rohrförmigen Behälter (1) aus einen flüssigkeitsdurchlässigen, faserstofftrennenden Material, wie zum Beispiel einem Siebtuch, und mit einer Einrichtung zum Einführen der Fasersuspension in den oberen Teil des Behälters (1), wobei der Behälter (1) aus einem breiteren, endlosen, flexiblen Siebband (20) und einem schmäleren, endlosen, flexiblen Siebband (30) gebildet ist, wobei die zwei Siebbänder dafür vorgesehen sind, parallel index Nähe voneinander in einem gemeinsamen Längsschnitt ihrer Bahnen zu laufen,
**dadurch gekennzeichnet, dass**
eine Formiereinrichtung (50,60) vorgesehen ist, um das breitere Band (20) in einen im Wesentlichen C-förmigen Querschnitt zu krümmen, wobei die Außenweite der Randteile (21) des gekrümmten Bands jeweils ein erstes Teil (25) einer Velcro®-Kupplung (26) entlang der Länge des Bands (20) trägt, dass eine Steuereinrichtung (60,50) vorgesehen ist, um die Bandteile des schmäleren Bands (30) in einen überlappenden Kontakt mit dem jeweiligen Teil (25) der Velcro®-Kupplung des breiteren Bands in der sich am Rand überlappenden Bereich der Bänder zu bringen, wobei die Randteile entlang der Länge desselben den zweiten Teil (27) der Velcro®-Kupplung (26) tragen, dass eine Düsenanordnung (2) zentral in dem Behälter (1) angeordnet ist, wobei die Düsenanordnung eine Vielzahl von Düsen aufweist, welche dafür vorgesehen kind, Strahlen der Faserstoffsuspension gegen die Innenseite der Umfangswand des Behälters (1) zur richten, und dass eine Einrichtung vorgesehen ist, um die Faserstoffsuspension unter erhöhtem Druck zu der Düsenanordnung zu dringen.

7. Vorrichtung nach Anspruch 6,
**dadurch gekennzeichnet, dass**
die Düsenanordnung eine Vielzahl von Gruppen von entlang der Düsenanordnung voneinander beabstandet angeordneten Düsen aufweist, wobei die Düsen der Gruppen um den Umfang der Anordnung voneinander beabstandet sind.

8. Vorrichtung nach Anspruch 6 oder 7,
**gekennzeichnet durch**
eine Antriebsanordnung zur Rotation der Düsenanordnung um die Achse des Behälters (1),

9. Vorrichtung nach Anspruch 8,
**dadurch gekennzeichnet, dass**
die Antriebseinrichtung dafür vorgesehen ist, die Düsenanordnung mit einer Hin- und Her-Bewegung entlang der Achse des Behälters (1) zu beaufschlagen, dass behälter (1) in einem Abstand von einem Gehäuse (9) zum Sammeln von Suspensionsflüssigkeit umfasst ist, und dass das Gehäuse einen unteren Ablauf (91) zum Wegführen von gesammelter Suspensionsflüssigkeit aufweist.

## Revendications

1. Procédé d'égouttage d'une suspension de fibres, la suspension étant introduite depuis le haut dans un conteneur tubulaire (1), disposé verticalement, d'un équipement séparateur de fibres tel qu'une toile métallique, le conteneur (1) étant constitué d'une bande sans fin, flexible de fils métalliques, plus large (20) et d'une bande sans fin, flexible de fils métalliques plus étroite (30) qui sont mutuellement liées par un joint à recouvrement sur les zones des bords adjacents, le conteneur (1) étant formé le long d'une section longitudinale commune de la trajectoire des deux bandes de fils métalliques, **caractérisé en ce que** les zones des bords portent chacune une partie correspondante d'une liaison Velcro (26), **en ce que** la section transversale de la bande plus large (20) est mise en forme selon un profil en C, par pliage de leurs deux zones de bords par-dessus la plus grande partie de la surface de la bande plus large, **en ce que** les zones des bords pliés pourvus de la première partie de la liaison Velcro (25) attachée à la bande plus large (20) sont amenées en contact superposé avec les zones de bords superposés pourvus de la seconde liaison Velcro (27) attachée à la bande étendue plus étroite pour constituer le conteneur tubulaire (1) et **en ce que** la suspension de fibres est introduite à pression élevée dans un assemblage de buses (2) qui est positionné centralement dans le conteneur (1), la suspension de fibres étant projetée hors de l'assemblage de buses via un nombre de buses (5) espacées autour de l'assemblage de buses, en direction de l'intérieur du conteneur (7).

2. Procédé selon la revendication 1, **caractérisé en ce que** l'assemblage de buses (2) est entraîné en rotation en liaison avec le conteneur (1) autour de son axe longitudinal sensiblement vertical).

3. Procédé selon les revendications 1 ou 2, **caractérisé en ce que** l'assemblage de buses comporte un conduit (3) dirigé verticalement vers le bas et portant une série de groupes (4) de buses (5) espacées le long du conduit orienté verticalement, les buses de chaque groupe étant espacées entre elles autour de l'axe longitudinal de l'assemblage de buses.

4. Procédé selon la revendication 3, **caractérisé en ce que** les buses (5) sont disposées de telle manière qu'elles forment des jets de suspension qui sont dirigés dans toutes les directions radiales essentielles vers l'intérieur du conteneur (1).

5. Procédé selon l'une quelconque des revendications 1 - 4, **caractérisé en ce que** la partie inférieure du conteneur tubulaire (1) présente une forme plate et est disposée selon une direction essentiellement horizontale, avec la bande la plus étroite (30) située en haut, **en ce que** la bande la plus étroite (30) est maintenue autour d'au moins un rouleau déflecteur pour la séparation de ses éléments de liaison Velcro par rapport aux éléments de liaison Velcro correspondants des bords pliés par-dessus les bords de la bande plus large (20), après quoi, dans la direction longitudinale de la bande plus large, les bords de la bande plus large sont repliés vers le plan de la portion centrale transversale de la bande plus large, de sorte qu'une fraction de fibres initialement égouttées sur la portion centrale de la bande la plus large peut être soumise à une pression mécanique sur la trajectoire de la bande plus large étendue.

6. Dispositif pour l'égouttage d'une suspension de fibres, comportant un conteneur tubulaire (1) allongé verticalement et orienté verticalement d'un équipement séparateur de fibres, perméable aux liquides, tel qu'une toile métallique et des moyens pour introduira la suspension de fibres dans la partie supérieure du conteneur (1), le conteneur (1) étant constitué d'une bande de fils métalliques flexible, sans fin plus large (20) et d'une bande de fils métalliques flexible, sans fin plus étroite (30), les deux bandes de fils métalliques étant agencées pour se déplacer en parallèle à proximité l'une de l'autre sur une section longitudinale commune de leur trajectoire, **caractérisé en ce qu'**il comprend des moyens de formage (50, 60) pour incurver la bande la plus large (20) pour lui donner un profil à section transversale en C, les cotés extérieurs des zones de bords (21) de la partie incurvée portant chacun une première partie (25) d'une liaison Velcro (26) le long de la bande (20), et **en ce qu'**il comprend des moyens de commande (60, 50) pour amener les zones de bords de la bande la plus étroite (30), ces zones de bords portant une deuxième partie (27) de la liaison Velcro (26), à assurer le recouvrement des parties correspondantes (25) du couplage Velcro (26) de la bande plus large sur les zones de bords des bandes, **en ce qu'**un assemblage de buses (2) est disposé centralement dans le conteneur (1), l'assemblage de buses comportant une pluralité de buses qui sont disposées pour diriger des jets de suspension de fibres contre la face intérieure de la paroi périphérique du conteneur (1) et **en ce que** des moyens sont prévus pour alimenter le groupe de buses en suspension de fibres sous pression élevée.

7. Dispositif selon la revendication 6, **caractérisé en ce que** l'assemblage de buses comporte une pluralité de groupes de buses espacées le long de l'assemblage de buses, les buses des groupes de buses étant espacées autour de la circonférence de l'assemblage.

8. Dispositif selon les revendications 6 ou 7, **caractérisé en ce qu'**il comporte un assemblage d'entraînement en rotation de l'assemblage de buses autour de l'axe du conteneur (1).

9. Dispositif selon la revendication 8, **caractérisé en ce que** l'assemblage d'entraînement est agencé pour imposer à l'assemblage de buses un déplacement alternatif le long de l'axe du conteneur (1) **en ce que** le conteneur (1) est enfermé à distance dans un carter (9) pour collecter le liquide de la suspension et **en ce que** le carter a un drainage de fond (91) pour évacuer le liquide collecté de la suspension.
